**Europäisches Patentamt**

**European Patent Office**

**Office européen des brevets**

(19)

(11) Publication number : **0 511 010 A2**

# (12) EUROPEAN PATENT APPLICATION

(21) Application number : **92303731.1**

(22) Date of filing : **24.04.92**

(51) Int. Cl.⁵ : **H04B 1/20**

(30) Priority : **26.04.91 JP 97676/91**

(43) Date of publication of application :
**28.10.92 Bulletin 92/44**

(84) Designated Contracting States :
**DE FR GB**

(71) Applicant : **PIONEER ELECTRONIC
CORPORATION
No. 4-1, Meguro 1-chome
Meguro-ku Tokyo-to (JP)**

(72) Inventor : **Go, Yasunao, c/o Pioneer Electronic
Corp.
Kawagoe Works., No.25-1, Aza-Nishicho, Oaza
Yamada
Kawagoe-shi, Saitama-ken (JP)**
Inventor : **Ikata, Yoshikatsu, c/o Pioneer
Electronic Corp.
Kawagoe Works., No.25-1, Aza-Nishicho, Oaza
Yamada
Kawagoe-shi, Saitama-ken (JP)**
Inventor : **Kimura, Toshiyuki, c/o Pioneer
Electronic Corp.
Kawagoe Works., No.25-1, Aza-Nishicho, Oaza
Yamada
Kawagoe-shi, Saitama-ken (JP)**
Inventor : **Shimotsuma, Hiroshi, c/o Pioneer
Elec. Corp.
Kawagoe Works., No.25-1, Aza-Nishicho, Oaza
Yamada
Kawagoe-shi, Saitama-ken (JP)**

(74) Representative : **Brunner, Michael John
GILL JENNINGS & EVERY 53-64 Chancery
Lane
London WC2A 1HN (GB)**

(54) system for data communication on automobile.

(57)    A data communication system for use on a motor vehicle has at least one master unit and at least one slave unit which are connected to a communication bus. The master unit has a first memory for storing display data updatably, a display controller for controlling a display operation based on the display data stored in the first memory, and a display unit for displaying necessary information based on the display data stored in the first memory under the control of the display controller. The slave unit has a second memory for storing display data, and a display data transfer unit for transferring the display data to the first memory through the communication bus. The display data transfer unit transfers the display data, which is stored in the second memory and represents the functions of the salve unit, through the communication bus to the first memory. The display controller controls the display unit based on the display data transferred to the first memory to display necessary information indicative of the functions of the slave unit. Therefore, the display unit can display data relative to a newly connected slave unit whose display data has not been stored in advance in the first memory.

EP 0 511 010 A2

## BACKGROUND OF THE INVENTION

Field of the Invention:

The present invention relates to a data communication system, and more particularly to a data communication system suitable for use in a network of components of an audiovisual system on an automobile.

Description of the Prior Art:

In recent years, automobile audio systems have been changing from systems which give the user only audio information such as music to systems which allow the user to enjoy both audio and visual information. Systems with both audio and visual capabilities are known as audiovisual systems.

Automobile audiovisual systems on automobiles are composed of many different audio and visual components. The audio components include a cassette tape deck, a radio tuner, a CD (compact disc) player, etc., while the visual components include a TV (television) tuner, a navigation system, etc.. Audio signals produced by some of these components are amplified by an amplifier and reproduced from loudspeakers in the automobile. Video signals produced by other components are displayed on a display unit in the automobile. Today, the audiovisual system components are controlled according to digital technology, i.e., by respective controllers in the form of microcomputers.

The components of an audiovisual system are required to be controlled systematically for systematic operation of the components. To meet this requirement, the controllers of the respective components are connected by a communication bus network, so that control data for the components will be transmitted through the communication bus.

For the convenience of description, either one of the components connected to the communication bus is referred to as a "master unit" for controlling the overall network, where as each of the other components is referred to as a "slave unit".

The master unit has a memory such as a ROM (Read-Only Memory) for storing display formats, to be displayed in a data display area, of the data of slave units that are planned to be connected to the master unit, and display data corresponding to the available functions of function key switches of the master unit. The master unit determines the slave units that are connected thereto and displays the stored data relative to the connected slave units on the display unit.

When a slave unit that has not been planned to be connected is newly connected to the master unit, however, since the memory of the master unit does not store display formats of the data of the newly connected slave unit, and display data corresponding to the available functions of the function key switches for the newly connected slave unit, the master unit is incapable of displaying the data with respect to the newly connected slave unit.

Therefore, the conventional master unit presents an obstacle to efforts to expand an existing data communication system by adding a new component or components thereto.

## SUMMARY OF THE INVENTION

It is an object of the present invention to provide a data communication system for use on an automobile, which includes a master unit having a display unit that, when a slave unit which has not been planned to be connected is newly connected to a communication bus of the data communication system, is capable of displaying data corresponding to the functions of the newly connected slave unit.

According to the present invention, there is provided a data communication system for use on a motor vehicle, comprising a communication bus, at least one master unit connected to the communication bus, and at least one slave unit connected to the communication bus, the master unit having a first memory for storing display data updatably, a display controller for controlling a display operation based on the display data stored in the first memory, and a display unit for displaying necessary information based on the display data stored in the first memory under the control of the display controller, the slave unit having a second memory for storing display data, and a display data transfer unit for transferring the display data to the first memory through the communication bus.

The display data transfer unit transfers the display data, which is stored in the second memory and represents the functions of the salve unit, through the communication bus to the first memory. The display controller controls the display unit based on the display data transferred to the first memory to display necessary information indicative of the functions of the slave unit.

Therefore, the display unit can display data relative to a newly connected slave unit whose display data has not been stored in advance in the first memory. It is necessary for the master unit to store all display data relative to slave units that will newly be connected to the master unit. The data communication system can easily be expanded by addition of new slave units.

The above and other objects, features and advantages of the present invention will become more apparent from the following description when taken in conjunction with the accompanying drawings in which preferred embodiments of the present invention shown by way of illustrative example.

## BRIEF DESCRIPTION OF THE DRAWINGS

FIG. 1 is a block diagram of a data communication system according to an embodiment of the present invention;

FIG. 2 is a block diagram of a power supply circuit for an audiovisual system as the data communication system;

FIG. 3 is a block diagram of the audiovisual system;

FIG. 4 is a block diagram of a control network of the audiovisual system;

FIG. 5 is a block diagram of a specific arrangement in which a master unit and a slave unit are connected to each other;

FIG. 6 is a block diagram of another specific arrangement in which a master unit and a slave unit are connected to each other;

FIG. 7 is a diagram of a transfer format of communication data;

FIG. 8 is a diagram of basic data formats;

FIG. 9 is a diagram of major classification data;

FIG. 10 is a diagram of subclassification data;

FIG. 11 is a diagram showing physical addresses;

FIG. 12 is a diagram showing physical addresses;

FIG. 13 is a diagram showing logical addresses;

FIG. 14 is a diagram illustrative of an example in which physical and logical addresses are assigned;

FIG. 15 is a front elevational view of the master unit;

FIG. 16 is a diagram showing a data storage structure of a RAM (Random Access Memory);

FIG. 17 is a flowchart of an operation process of the data communication system; and

FIG. 18 is a diagram showing a communication sequence by way of example.

## DETAILED DESCRIPTION OF THE PREFERRED EMBODIMENTS

### GENERAL ARRANGEMENT OF DATA COMMUNICATION SYSTEM

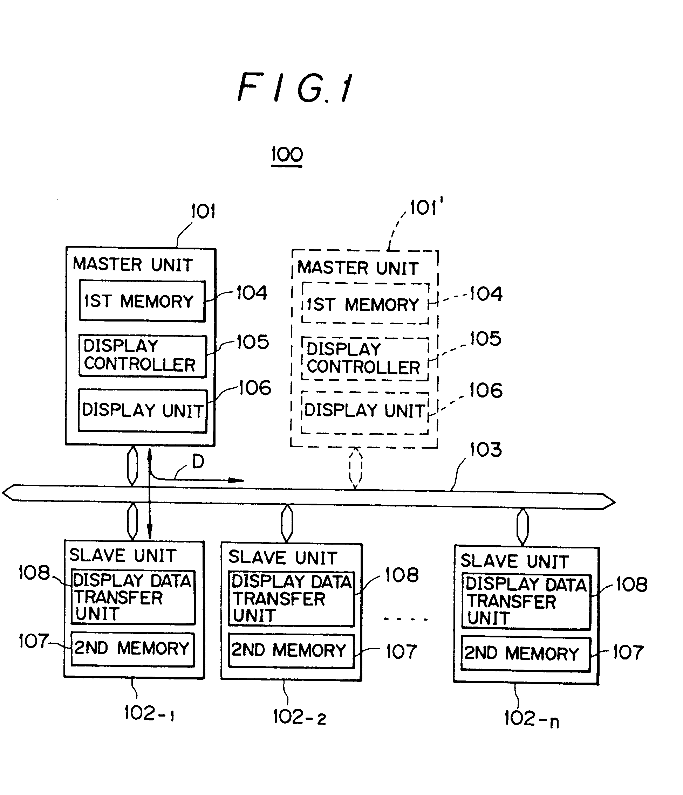

FIG. 1 schematically shows in block form a data communication system for use on an automobile according to an embodiment of the present invention.

The data communication system, generally designated by the reference numeral 100, comprises at least one master unit 101 (101') connected to a communication bus 103 and a plurality of slave units $102_{-1}$, $102_{-2}$, ..., $102_{-n}$ connected to the communication bus 103. The master unit 101 (101') has a first memory 104 for storing display data D updatably, a display controller 105 for controlling a display operation based on the display data D, and a display unit 106 for displaying necessary information based on the display data D under the control of the display controller 105. Each of the slave units $102_{-1}$, $102_{-2}$, ..., $102_{-n}$ has a second memory 107 for storing display data D, and a display data transfer unit 108 for transferring the display data D to the first memory 104 through a communication bus 103.

In operation, the display data transfer unit 108 transfers the display data D through the communication bus 103 to the first memory 104.

The display controller 105 controls the display unit 106 based on the display data D transferred to the first memory 104 to display necessary information.

Therefore, the display unit 106 can display data relative to a newly connected slave unit whose display data has not been stored in advance in the first memory 104.

### POWER SUPPLY OF AUDIOVISUAL SYSTEM

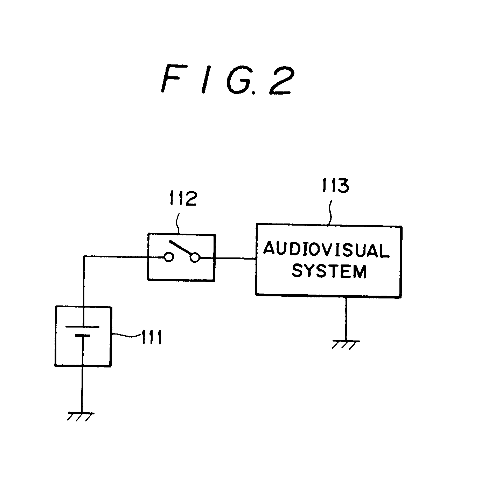

The principles of the present invention are particularly useful when embodied in an audiovisual (AV) system on an automobile as the data communication system. As shown in FIG. 2, the audiovisual system, denoted at 113, is supplied with electric energy from a battery 111 through an ACC switch 112. The ACC switch 112 is ganged with an engine start keyswitch of the automobile. When the engine key inserted in the engine start keyswitch is turned to the position of the ACC switch, the accessories on the automobile are energized by the battery 111. At the same time, the audiovisual system 113 is also energized by the battery 111.

### ARRANGEMENT OF AUDIOVISUAL SYSTEM

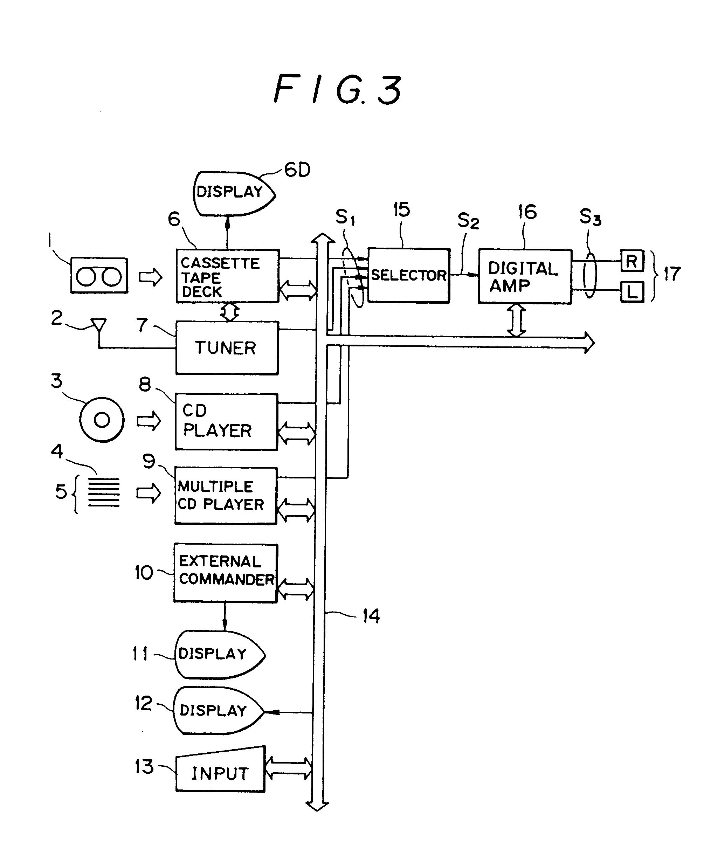

FIG. 3 shows a detailed systematic arrangement of the audiovisual system. The audiovisual system has audio reproducing components and visual reproducing components. The audio reproducing components include a cassette tape deck 6 for reproducing recorded audio signals from a cassette tape 1, a tuner 7 such as an AM/FM tuner for reproducing radio signals which are received by an antenna 2, a CD player 8 for reproducing recorded signals from a CD 3, and a multiple CD player 9 having an automatic CD changer 5 for reproducing recorded signals from multiple CDs 4. The visual reproducing components include a TV tuner contained in the tuner 7, for reproducing TV signals received by the antenna 2, and a display unit 12 for displaying images based on the TV signals and also displaying still images based on signals from the CD player 8 if a CD-ROM is played back by the CD player 8. Typically, a CD-ROM is employed by a navigation system. The audiovisual system has an external commander 10 which is in the form of a keyboard for entering various operation commands. A display unit 11 is connected to the external commander 10. The audiovisual system also has an input unit 13, which may be incorporated in the external commander 10.

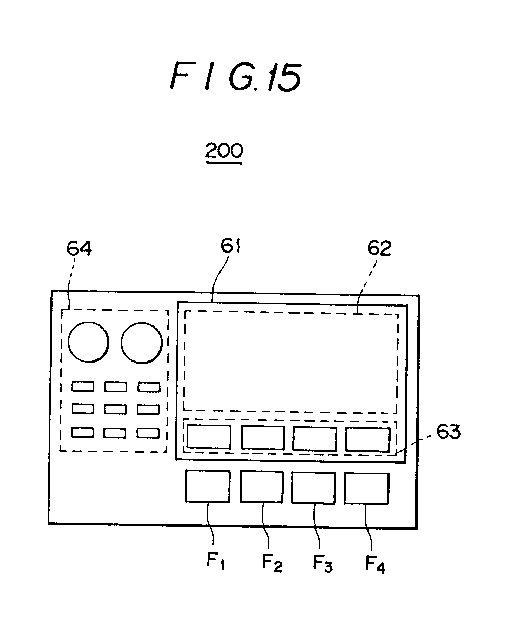

The audiovisual system also has another display unit 6D connected to the cassette tape deck 6 for displaying various items of data including operating statuses of the components of the audiovisual system. The display unit 6D corresponds to the display unit 61 shown in FIG. 15.

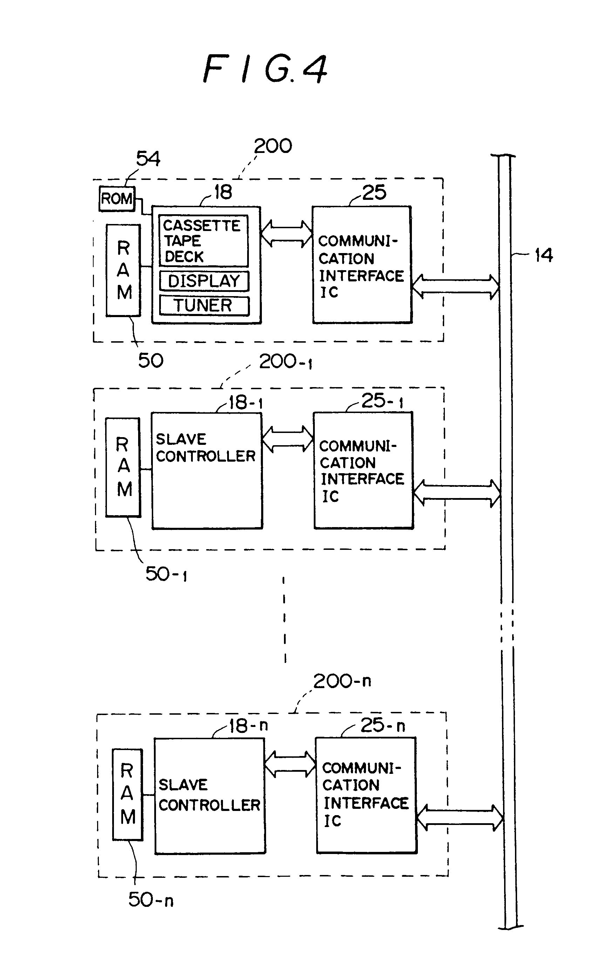

The above components of the audiovisual system have respective controllers for controlling their own operation. These controllers are connected to each other through a communication bus 14, thereby making up a communication bus control network. The control network is shown in FIG. 4, and will be described in detail later on.

Reproduced signals $S_1$ from the audio reproducing components are selectively applied through a selector 15 as a reproduced signal $S_2$ to a digital amplifier 16. After the reproduced signal $S_2$ has been amplified by the digital amplifier 16, it is applied as reproduced signals $S_3$ to loudspeakers 17 from which the reproduced sounds $S_3$ are radiated. The digital amplifier 16 contains a digital signal processing circuit which is controlled by a controller in the digital amplifier 16, the controller being connected to the communication bus 14.

*CONTROL NETWORK OF AUDIOVISUAL SYSTEM*

FIG. 4 shows the control network in detail. For the purpose of description, the audiovisual system components connected to the communication bus 14 as shown in FIG. 3 will hereinafter be referred to as "units." As shown in FIG. 4, these units are connected to the communication bus 14 parallel to each other. Either one of these units is selected as a "master" unit, indicated by 200, for controlling the control network, while the other units serve as "slave" units, indicated by $200_{-1} \sim 200_{-n}$.

The master unit 200 has a master controller 18 connected through a communication interface IC 25 to the communication bus 14. The master controller 18 doubles as controllers for controlling the cassette tape deck 6 and the tuner 7. The slave units $200_{-1} \sim 200_{-n}$ have respective slave controllers $18_{-1} \sim 18_{-n}$ which are also connected to the communication bus 14 through respective communication interface ICs $25_{-1} \sim 25_{-n}$. RAMs 50, $50_{-1} \sim 50_{-n}$ are connected respectively to the slave controllers $18_{-1} \sim 18_{-n}$.

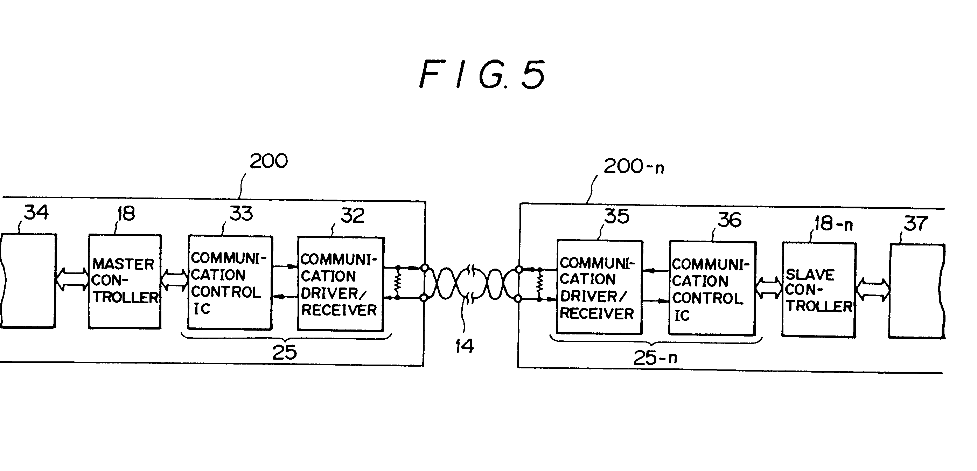

FIG. 5 shows a specific arrangement in which the master unit 200 and the slave unit $200_{-n}$ are connected to each other. The master unit 200 and the slave unit $200_{-n}$ are connected to each other by the communication bus 14. The communication bus 14 comprises a twisted pair of conductors or wires. Communication data DT transferred through the communication bus 14 is transmitted and received by the communication interface ICs 25, $25_{-n}$ of the master unit 200 and the slave unit $200_{-n}$, respectively. The communication interface IC 25 is divided into a communication driver/receiver 32 and a communication control IC 33. Likewise, the communication interface IC $25_{-n}$ is divided into a communication driver/receiver 35 and a communication control IC 36. Heretofore, the communication driver/receiver and the communication control IC have been integrally combined in one IC. The communication control IC 33 is composed of a CMOS transistor, while the communication driver/receiver 32 is composed of a bipolar transistor of high current-driven capability. The communication driver/receiver 35 and the communication control IC 36 are of the same structures as the communication driver/receiver 32 and the communication control IC 33.

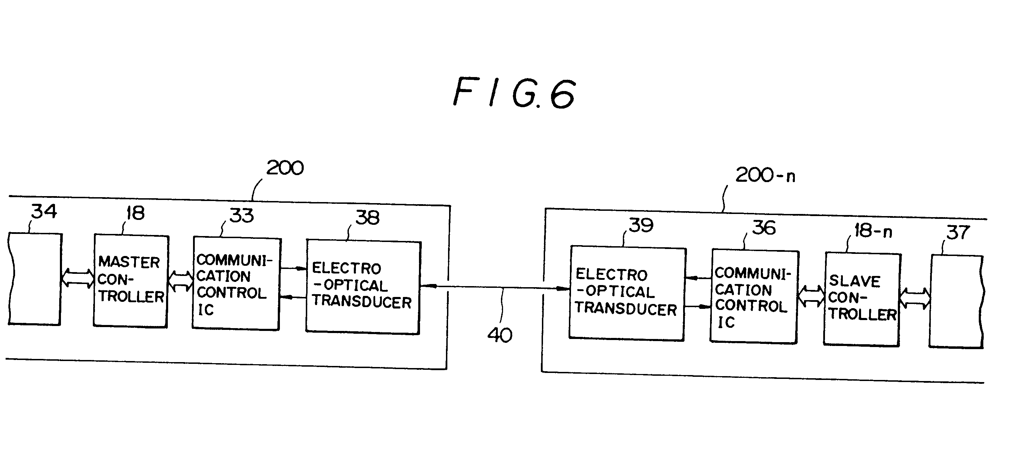

The communication interface IC 25, for example, which is divided into the communication control IC 33 and the communication driver/receiver 32, is capable of coping with different transmission mediums for the communication bus 14. In FIG. 5, the communication bus 14 is composed of a twisted pair of conductors or wires for differential transmission. If the communication bus 14 comprises an optical communication cable 40 as shown in FIG. 6, then the communication driver/receiver 32 shown in FIG. 5 may be replaced with an electro-optical transducer 38 with the communication control IC 33 remaining unchanged. Another advantage is that since the master unit 200 fails due primarily to disturbance noise entering from the communication bus 14, only the communication driver/receiver 32 will malfunction when an excessive signal is applied thereto from the communication bus 14, and replacing the malfunctioning communication driver/receiver 32 with a new one will restore the master unit 200. Consequently, the maintenance of the master unit 200 and also the slave unit $200_{-n}$ is relatively easy to carry out. The easy maintenance is particularly advantageous with audiovisual systems on automobiles because the master and slave units are exposed to and tend to be damaged by noise induced by the automobile engines.

Furthermore, the fabrication of bipolar transistors and CMOS transistors according to different processes is easier and less expensive than the fabrication of Bi-CMOS ICs.

While only the communication interface IC 25 has been described above, each of the communication interfaces $25_{-1} \sim 25_{-n}$ of the other slave units $200_{-1} \sim 200_{-n}$ is also divided into a communication control IC and a communication driver/receiver.

*TRANSMISSION FORMAT OF COMMUNICATION DATA DT*

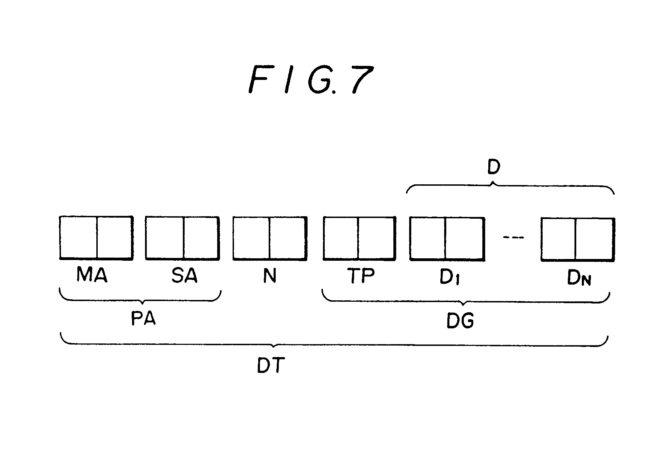

FIG. 7 shows a transfer format of the communication data DT. As shown in FIG. 7, the communication data DT comprises, from its leading end, master address data MA indicating the address of the master unit 200, slave address data SA indicating the addresses of the slave units $200_{-1} \sim 200_{-n}$, message length data N indicating the message length of data D, classification data TP indicating the type of the data D, and the data D itself which represents the contents to be transferred.

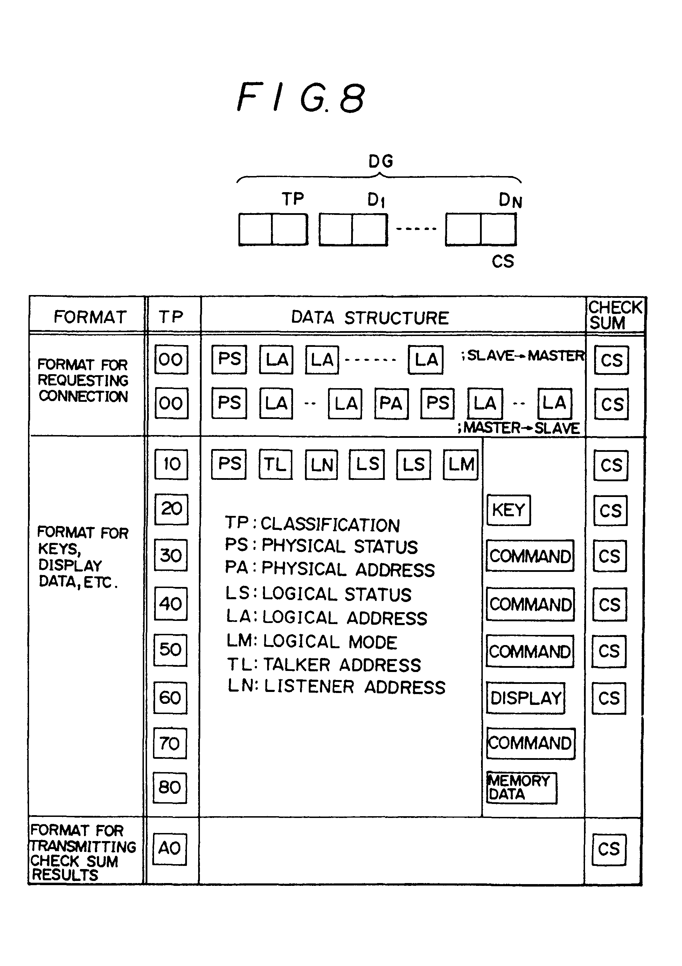

The arrangement of the data D varies depending on the contents of the communication data DT, i.e., the classification data TP. There are roughly three formats for the data D. As shown in FIG. 8, the first format is a format for requesting a connection, the second format is a format for keys and display data, and the third format is a format for transmitting the result of a check sum CS. In the format for keys and display data as shown in FIG. 8, data ranging from physical status data PS to logical mode data LM are all identical, and omitted from illustration.

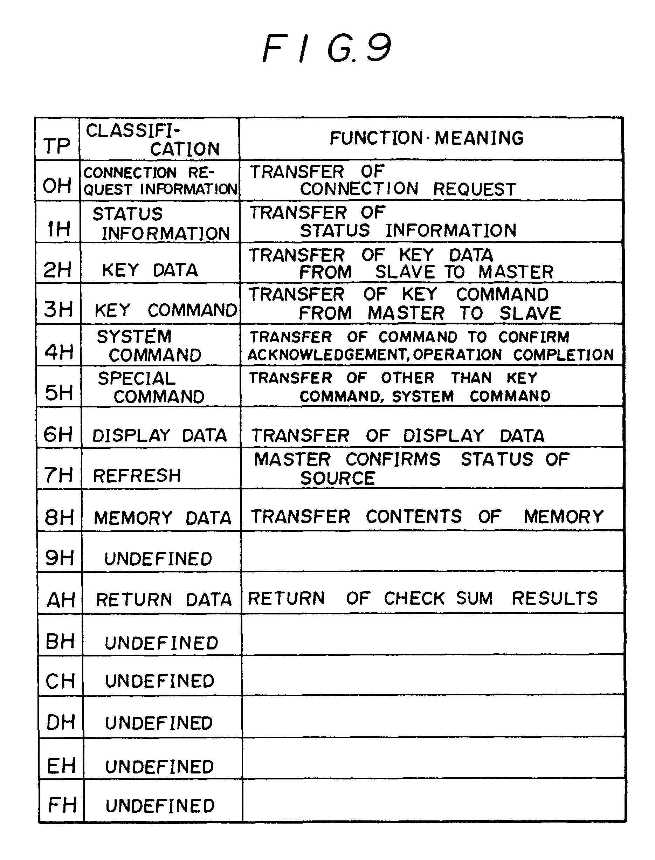

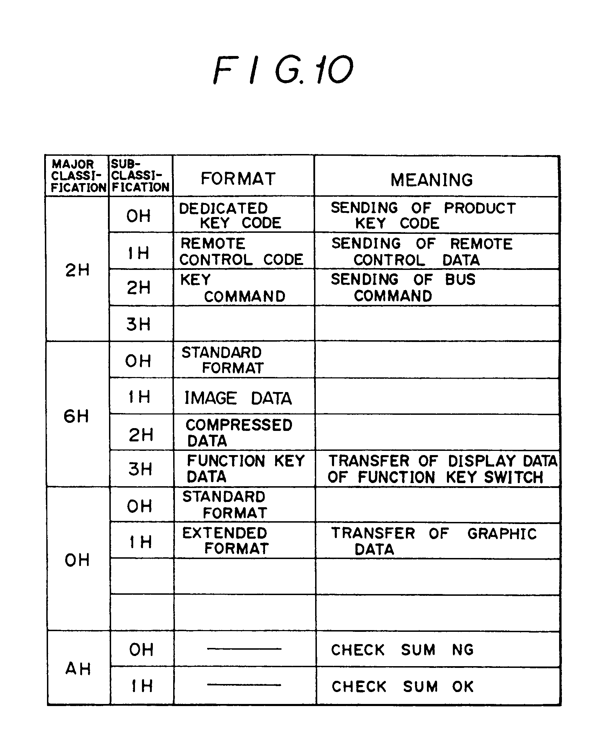

The classification data TP is positioned at the leading end of the communication data DT, and serves as a data area indicating the type of the data D following the classification data TP. The classification data TP is composed of major classification data and subclassification data. As shown in FIG. 9, the major classification data represents the type of the data D. If the entire classification data TP is of 8 bits, then the major classification data is allotted four high-order bits. As shown in FIG. 10, the subclassification data is mainly used to identify the format of the data D, and is allotted four low-order bits. For example, if the classification data TP is TP = "21H", then the four high-order bits are "2H" and mean that key data are to be transferred from the slave unit to the master unit, and the four low-order bits are "1H" and mean that the key data to be transferred is remote control data.

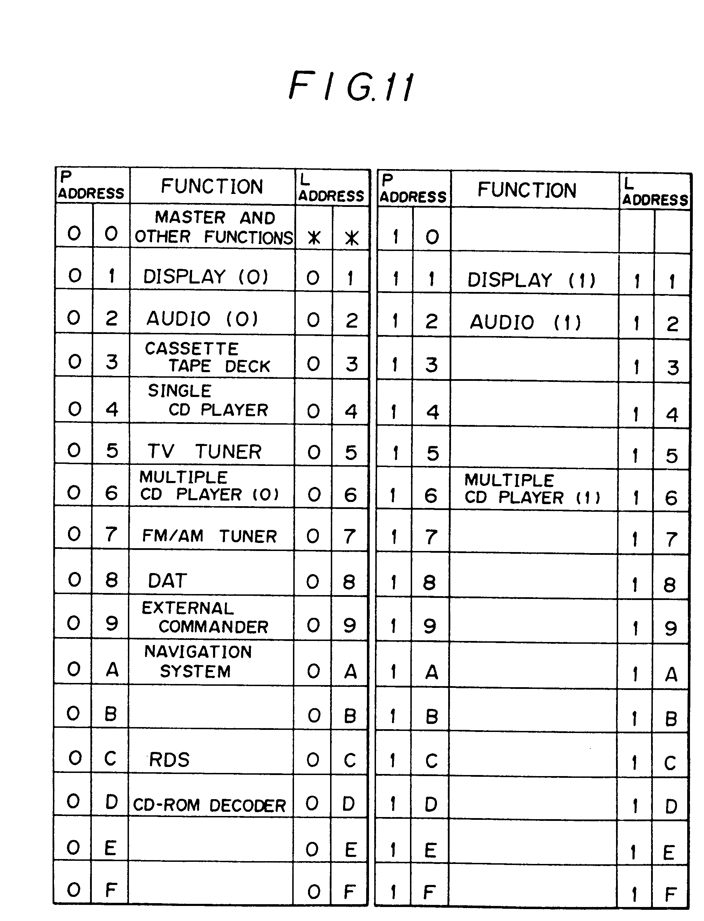

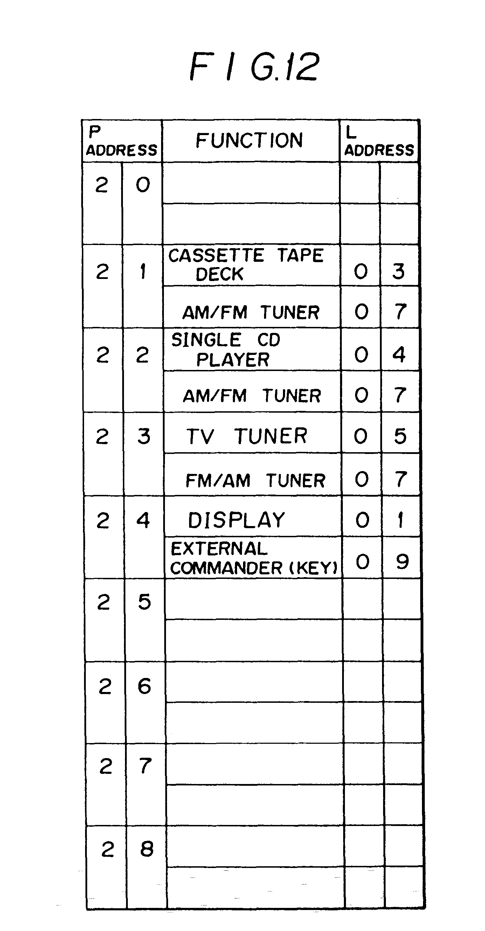

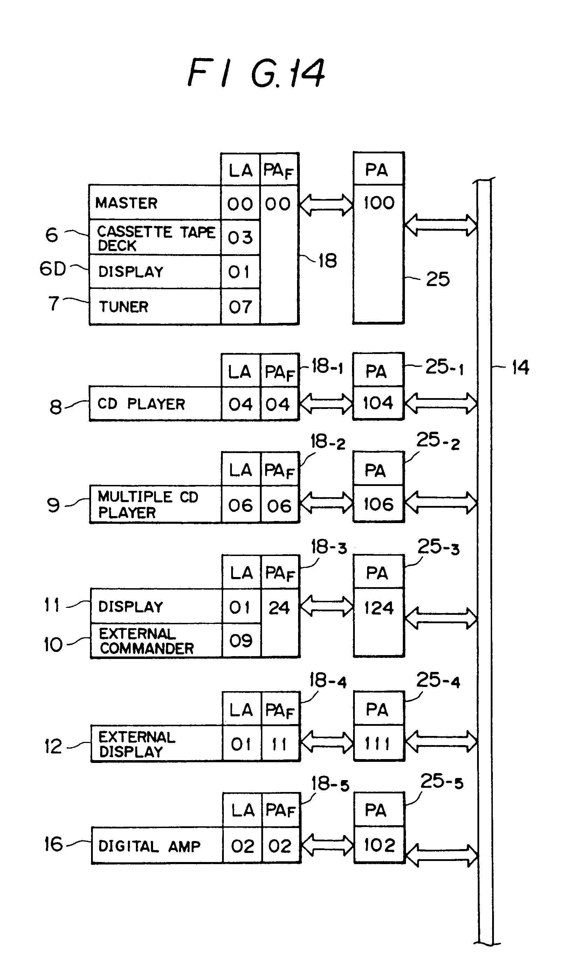

As illustrated in FIGS. 11 and 12, the physical address data PA represents communication addresses for specifying the communication interface ICs $25_{-1} \sim 25_{-n}$ of the master unit 200 and the slave units $200_{-1} \sim 200_{-n}$ on the communication bus 14, the addresses indicating the master unit 200 and the slave units $200_{-1} \sim 200_{-n}$. The physical address data PA for specifying the master unit 200 is fixed at all times. Basically, one unit is allotted one physical address data PA. FIG. 14 shows an example in which the units shown in FIG. 3 are allotted physical address data PA. In FIG. 14, the physical address data PA are established for the master and slave controllers $18 \sim 18_{-5}$. This is to take into account the fact that two functional elements, such as the cassette tape deck 6 and the tuner 7, are connected to one master controller 18, as with the master unit 200. If one controller is combined with one function, then the physical address data PA and the logical address data LA indicate the same address, as with the slave controllers $18_{-1}$, $18_{-2}$, $18_{-5}$.

The physical status data PS represents status information about the master unit 200 and the slave units $200_{-1} \sim 200_{-n}$, and is data indicative of the number of function addresses (i. e., the logical address data LA, described below ) that the units have.

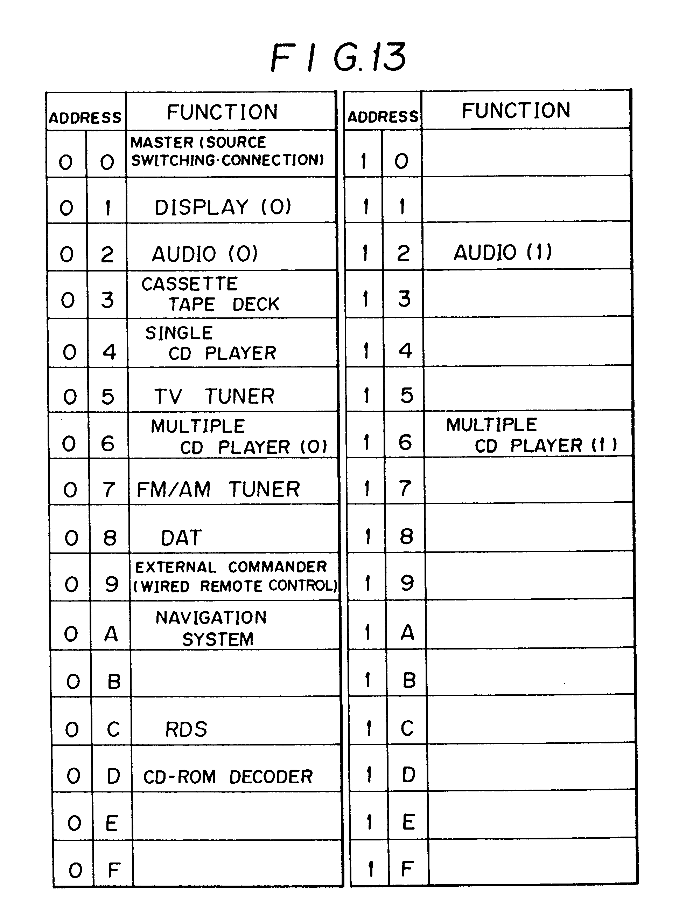

As shown in FIG. 13, the logical address data LA is data indicative of each of the functions (e.g., the tuner and the cassette tape deck) possessed by the master unit 200 and the slave units $200_{-1} \sim 200_{-n}$. The logical address data LA is assigned to each function. The number of logical address data LA is not fixed because there are as many logical address data LA (e. g., $LA_1$, $LA_2$, ...) as there are functions possessed by the controller that is determined by the physical address data PA. FIG. 14 also shows the logical address data LA assigned to the units shown in FIG. 3.

The talker address data TL indicates the address of a transmitting side (talker) which transmits the communication data DT. The listener address data LN indicates the address of a receiving side (listener) which receives the communication data DT. The logical status data LS represents the status of the function corresponding to each logical address LA. The logical mode data LM represents the operation status (mode) of the function corresponding to each logical address LA. The check sum data CS is added data for detecting an error to improve the reliability of the data D.

### DISPLAY DATA TRANSFER AND DISPLAY OPERATION

The transfer of display data between the master unit 200 and the slave units $200_{-1} \sim 200_{-n}$ of the above audiovisual system, and display operation of the master unit 200 will be described below.

A fundamental algorithm for a sequence for transferring display data in the data communication system according to the present invention is as follows:

1) The master controller of the master unit functions as a data request determining means and a data requesting means. The master controller as the data request determining means determines whether display data relative to a slave unit to be controlled at present is stored in a memory or not. If no such display data is stored in the memory, the master controller operates as the data requesting means to request the slave unit to transfer display data.

2) When requested to transfer display data, the slave controller of the slave unit functions as a display data transferring means to transfer necessary display data through the communication bus to the memory of the master unit.

3) Then, the master controller functions as a display control means to control a display unit to display necessary information based on the display data transferred from the slave controller to the master controller.

Therefore, even if the master unit has not had display data relative to a slave unit to be controlled, the master unit can display desired information by making the slave unit transfer the display data from the slave unit.

The above communication sequence is stored as a control program in the controllers of the master unit 200 and the slave units $200_{-1} \sim 200_{-n}$. The display data that have previously been transferred from the slave units $200_{-1} \sim 200_{-n}$ are stored in the RAM 50 (see FIG. 4) of the master unit 200.

The data communication system according to the present invention will be described in greater detail with reference to FIGS. 15 through 18. For the sake of brevity, the display data will be described only as data for displaying the functions of function key switches.

FIG. 15 shows the appearance of the master unit 200.

In FIG. 15, the master unit 200 has a plurality of function key switches $F_1$ through $F_4$ that can operate as different function switches depending on a slave unit to be controlled thereby, and a dot-matrix display unit 61 for displaying various items of information including an operating status.

The display unit 61 includes a data display area 62 for displaying various items of data including level meter data, and a function display area 63 for displaying the functions of the function key switches each time the functions change when a slave unit to be controlled by the master unit 200 is selected.

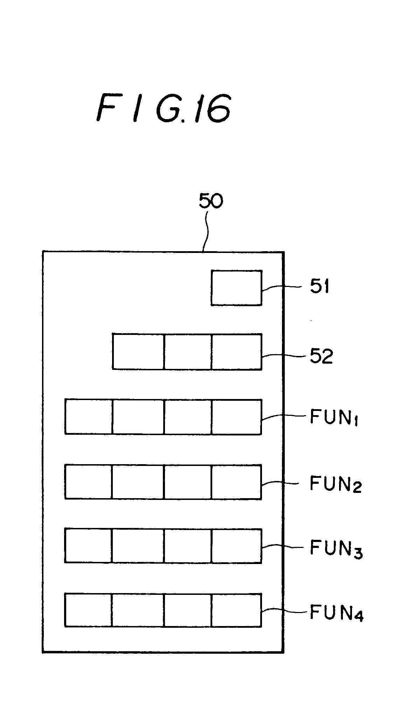

FIG. 16 shows a data storage structure of the RAM 50 of the master unit 200, which serves as the first memory 104 (see FIG. 1).

The RAM 50 has function data storage areas $FUN_1$ through $FUN_4$ for storing four-character data relative to the respective function key switches $F_1$ through $F_4$ shown in FIG. 15, a display data presence/absence storage area 51 for storing data indicative of whether display data is stored in the RAM 50, and a display data origin storage area 52 for storing data indicative of the slave unit from which display data is transferred.

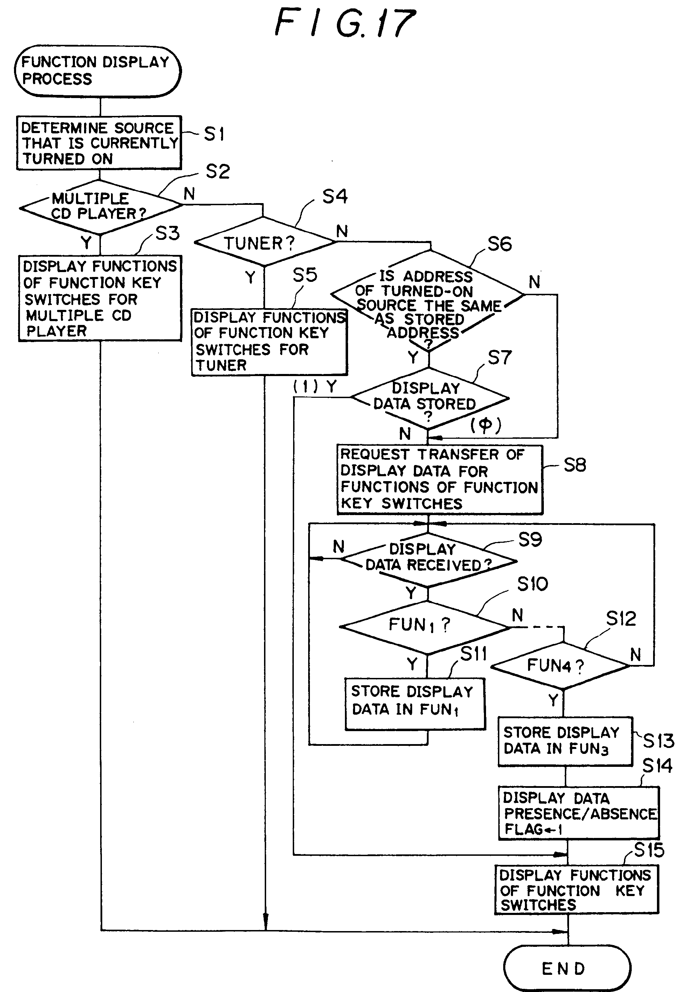

FIG. 17 shows an operation process of the data communication system for transferring display data for the function key switches and displaying necessary information based on the transferred display data. It is assumed that a ROM 54 (see FIG. 4) of the master unit 200 already stores the display data of the functions of function key switches for the multiple CD player and the tuner.

First, the master controller 18 of the master unit 200 determines a slave unit which is currently in operation in a step S1.

Then, the master controller 18 determines whether the currently operating slave unit is the multiple CD player or not in a step S2.

If the currently operating slave unit is the multiple CD player, then the master controller 18 reads the display data of the function key switches for the multiple CD player from the ROM 54, and displays the data in the function display area 63 (see FIG. 15) in a step S3.

If the currently operating slave unit is not the multiple CD player, then the master controller 18 determines whether the currently operating slave unit is the tuner or not in a step S4.

If the currently operating slave unit is the tuner, then the master controller 18 reads the display data of the function key switches for the tuner from the ROM 54, and displays the data in the function display area in a step S5.

If the currently operating slave unit is not the tuner either, then since the currently operating slave unit is not one of the slave units whose function display data have already been stored, the master controller 18 determines whether the physical address data of the currently operating slave unit is the same as physical address data stored in the display data origin storage area 52 or not in a step S6.

If the physical address data of the currently operating slave unit is the same as physical address data stored in the display data origin storage area 52, the master controller 18 functions as the data request determining means to determine whether display data is stored in the RAM 50 based on the data stored in the display data presence/absence storage area 51 in a step S7.

If display data is stored in the RAM 50, then the master controller 18 displays the functions of the function key switches based on the stored display data in a step S15, and control comes to an end.

If no display data is stored in the RAM 50, then display data is transferred from the currently operating slave unit in steps S8 through S14.

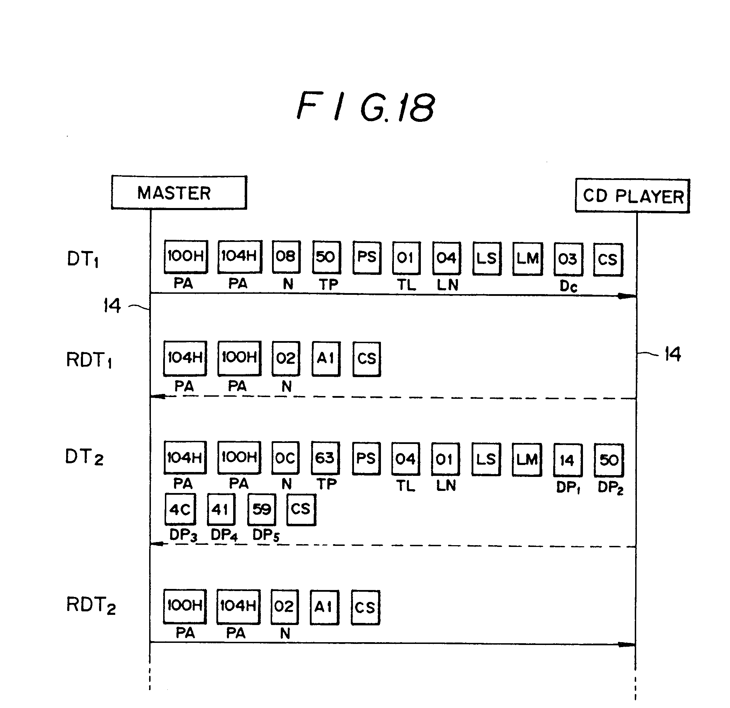

The display data transfer operation will be described in detail with reference to the communication sequence shown in FIG. 18. It is assumed that the currently operating slave unit which will transfer display data is the CD player 8 (= slave unit $200_{-1}$).

If the physical address data of the currently operating slave unit is not the same as physical address data stored in the display data origin storage area 52, and no display data is stored in the memory, then the master controller 18 functions as the display data requesting means to request the slave unit to transfer display data for displaying the functions of function key switches in a step S8.

More specifically, if the physical address data of the CD player 8 is not the same as the physical address data stored in the display data origin storage area 52, then the master controller 18 requests the slave controller $18_{-1}$ of the CD player 8 to transfer display data for displaying the functions of function key switches.

In FIG. 18, the master unit 200 issues and transmits communication data $DT_1$ through the communi-

cation bus 14 to the slave unit, i.e., the CD player 8, in order to request the transfer of display data. The communication data $DT_1$ includes physical address data PA = "100H" ("H" means the hexadecimal notation) of the master unit, physical address data PA = "104H" indicating the CD player 8, message length data N = "08H" indicating that the number of data items to be transmitted is 8, classification data TP "50H" indicating the transmission of a special command, physical status data PS, talker address data TL = "01H" indicating that the element that requests display data is the display unit, listener address data LN = "04H" indicating that the element which is requested for display data is the slave controller of the CD player 8, logical status data LS, logical mode data LM, display data request command (special command) Dc = "03H" indicating a request for the transfer of the display data of the function key switches, and check sum data CS.

Based on the communication data $DT_1$, the CD player 8 recognizes that the master unit 200 is requesting display data, and transmits return data $RDT_1$ back to the master unit 200, acknowledging the request.

The CD player 8 reads, from the RAM $50_{-1}$, the display data for displaying the function of the first function key switch $F_1$ (FIG. 15), and transmits communication data $DT_2$, including the display data, to the master unit 200.

The communication data DT, includes physical address data PA = "104H" of the CD player 8, physical address data PA = "100H" indicating the master unit 200, message length data N= "OCH" indicating that the number of data items to be transmitted is 12, classification data TP "63H" indicating the transmission of display data of the function key switch, physical status data PS, talker address data TL = "04H" indicating that the element from which the display data is to be transferred is the slave controller of the CD player 8, listener address data LN = "01H" indicating that the element to which the display data is to be transferred is the display unit, logical status data LS, logical mode data LM, first display data $DP_1$ having four high-order bits = "1H" indicating the transfer of the display data of the first function key switch and four low-order bits = "4H" indicating that the number of characters to be transferred is 4, second through fifth display data $DP_2$ ~ $DP_5$ indicating four-character display data (which represents "PLAY" in the illustrated example) using the ASCII code, and check sum data CS.

Referring back to FIG. 17, the master controller 18 then determines whether it has received display data for displaying the function of a function key switch or not in a step S9. If not received, then the master controller 18 is kept in a standby condition, waiting for the display data. If received, the master controller 18 determines whether the received data is the display data for displaying the function of the first function key switch or not in a step S10.

If the received data is the display data for displaying the function of the first function key switch $F_1$, then the master controller 18 stores the received data in the function data storage area $FUN_1$ of the RAM 50 for the first function key switch in a step S11. Then, control goes back to the step S9 and waits for the display data of another function key switch.

The above steps S9, S10, S11 are repeated until the display data for displaying the functions of the second, third, and fourth function key switches $F_2$, $F_3$, $F_4$ (see FIG. 15) are received. If the received display data is the display data of the fourth function key switch $F_4$, then the master controller 18 stores the received data in the function data storage area $FUN_4$ of the RAM 50 for the fourth function key switch in a step S13. The master controller 18 then stores "1" in the display data presence/absence storage area 51, i.e., sets a display data presence/absence flag to "1", in a step S14.

Thereafter, the master controller 18 functions as the display control means to display, in the function display area 63 (see FIG. 15), necessary information represented by the display data of the first through fourth function key switches $F_1$ ~ $F_4$ based on the data stored in the first through fourth function data storage areas $FUN_1$ ~ $FUN_4$, in the step S15. Now, control is brought to an end.

In the above embodiment, only the transfer of the display data for displaying the functions of function key switches has been described. However, the principles of the present invention are also applicable to the transfer of various other data, such as display data to be displayed in a data display area, image data representing still images, and compressed image data representing moving images.

While the master unit requests display data in the illustrated embodiment, the data communication system according to the present invention may be arranged such that any slave unit may voluntarily transfer display data to the master unit or any two slave units, one of which functions as a master unit, may transfer display data therebetween.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A data communication system for use on a motor vehicle, comprising:

a communication bus;

at least one master unit connected to said communication bus; and

at least one slave unit connected to said communication bus;

said master unit having first memory means for storing display data updatably, display control means for controlling a display operation based on the display data stored in said first memory means, and display means for displaying necessary information based on the display data stored in said first memory means under the control of said display control means;

said slave unit having second memory means for storing display data, and display data transfer means for transferring the display data to said first memory means through said communication bus.

2. A data communication system according to claim 1, wherein said master unit includes display data requesting means for requesting said display data transfer means to transfer the display data.

3. A data communication system according to claim 1, wherein said first memory means comprises means for storing, in advance, display data with respect to a predetermined slave unit.

4. A data communication system according to claim 1, wherein said master unit has at least one control input switch, said display data including display data for displaying a function of said control input switch.

5. A data communication system according to claim 2, wherein said first memory means comprises means for storing, in advance, display data with respect to a predetermined slave unit.

6. A data communication system according to claim 1, wherein said display data requesting means has data request determining means for determining whether display data relative to the slave unit to be controlled by said master unit has already been stored in said first memory means, and means for requesting said display data transfer means to transfer the display data only when the display data relative to the slave unit to be controlled by said master unit has not been stored in said first memory means.

# F I G.1

100

# F I G. 2

AUDIOVISUAL SYSTEM

112  113  111

# F I G. 3

# F I G.4

# FIG.5

200

200-n

34  18  33  32

| MASTER CON-TROLLER | COMMUNI-CATION CONTROL IC | COMMUNI-CATION DRIVER/ RECEIVER |

25

14

35  36  18-n  37

| COMMUNI-CATION DRIVER/ RECEIVER | COMMUNI-CATION CONTROL IC | SLAVE CON-TROLLER |

25-n

# FIG.6

$$F\,I\,G.\,7$$

# F I G. 8

DG

TP    D₁    Dɴ

CS

| FORMAT | TP | DATA STRUCTURE | | CHECK SUM |
|---|---|---|---|---|
| FORMAT FOR REQUESTING CONNECTION | 00 | PS LA LA ------ LA ;SLAVE→MASTER | | CS |
| | 00 | PS LA -- LA PA PS LA -- LA ;MASTER→SLAVE | | CS |
| FORMAT FOR KEYS, DISPLAY DATA, ETC. | 10 | PS TL LN LS LS LM | | CS |
| | 20 | TP : CLASSIFICATION PS : PHYSICAL STATUS PA : PHYSICAL ADDRESS LS : LOGICAL STATUS LA : LOGICAL ADDRESS LM : LOGICAL MODE TL : TALKER ADDRESS LN : LISTENER ADDRESS | KEY | CS |
| | 30 | | COMMAND | CS |
| | 40 | | COMMAND | CS |
| | 50 | | COMMAND | CS |
| | 60 | | DISPLAY | CS |
| | 70 | | COMMAND | |
| | 80 | | MEMORY DATA | |
| FORMAT FOR TRANSMITTING CHECK SUM RESULTS | AO | | | CS |

# F I G. 9

| TP | CLASSIFI-CATION | FUNCTION·MEANING |
|---|---|---|
| OH | CONNECTION RE-QUEST INFORMATION | TRANSFER OF CONNECTION REQUEST |
| 1H | STATUS INFORMATION | TRANSFER OF STATUS INFORMATION |
| 2H | KEY DATA | TRANSFER OF KEY DATA FROM SLAVE TO MASTER |
| 3H | KEY COMMAND | TRANSFER OF KEY COMMAND FROM MASTER TO SLAVE |
| 4H | SYSTEM COMMAND | TRANSFER OF COMMAND TO CONFIRM ACKNOWLEDGEMENT, OPERATION COMPLETION |
| 5H | SPECIAL COMMAND | TRANSFER OF OTHER THAN KEY COMMAND, SYSTEM COMMAND |
| 6H | DISPLAY DATA | TRANSFER OF DISPLAY DATA |
| 7H | REFRESH | MASTER CONFIRMS STATUS OF SOURCE |
| 8H | MEMORY DATA | TRANSFER CONTENTS OF MEMORY |
| 9H | UNDEFINED | |
| AH | RETURN DATA | RETURN OF CHECK SUM RESULTS |
| BH | UNDEFINED | |
| CH | UNDEFINED | |
| DH | UNDEFINED | |
| EH | UNDEFINED | |
| FH | UNDEFINED | |

# F I G. 10

| MAJOR CLASSI-FICATION | SUB-CLASSI-FICATION | FORMAT | MEANING |
|---|---|---|---|
| 2H | 0H | DEDICATED KEY CODE | SENDING OF PRODUCT KEY CODE |
| | 1H | REMOTE CONTROL CODE | SENDING OF REMOTE CONTROL DATA |
| | 2H | KEY COMMAND | SENDING OF BUS COMMAND |
| | 3H | | |
| 6H | 0H | STANDARD FORMAT | |
| | 1H | IMAGE DATA | |
| | 2H | COMPRESSED DATA | |
| | 3H | FUNCTION KEY DATA | TRANSFER OF DISPLAY DATA OF FUNCTION KEY SWITCH |
| 0H | 0H | STANDARD FORMAT | |
| | 1H | EXTENDED FORMAT | TRANSFER OF GRAPHIC DATA |
| | | | |
| | | | |
| AH | 0H | —————— | CHECK SUM NG |
| | 1H | —————— | CHECK SUM OK |

# F I G.11

| P ADDRESS | | FUNCTION | L ADDRESS | | P ADDRESS | | FUNCTION | L ADDRESS | |
|---|---|---|---|---|---|---|---|---|---|
| O | O | MASTER AND OTHER FUNCTIONS | ✻ | ✻ | 1 | O | | | |
| O | 1 | DISPLAY (0) | O | 1 | 1 | 1 | DISPLAY (1) | 1 | 1 |
| O | 2 | AUDIO (0) | O | 2 | 1 | 2 | AUDIO (1) | 1 | 2 |
| O | 3 | CASSETTE TAPE DECK | O | 3 | 1 | 3 | | 1 | 3 |
| O | 4 | SINGLE CD PLAYER | O | 4 | 1 | 4 | | 1 | 4 |
| O | 5 | TV TUNER | O | 5 | 1 | 5 | | 1 | 5 |
| O | 6 | MULTIPLE CD PLAYER (0) | O | 6 | 1 | 6 | MULTIPLE CD PLAYER (1) | 1 | 6 |
| O | 7 | FM/AM TUNER | O | 7 | 1 | 7 | | 1 | 7 |
| O | 8 | DAT | O | 8 | 1 | 8 | | 1 | 8 |
| O | 9 | EXTERNAL COMMANDER | O | 9 | 1 | 9 | | 1 | 9 |
| O | A | NAVIGATION SYSTEM | O | A | 1 | A | | 1 | A |
| O | B | | O | B | 1 | B | | 1 | B |
| O | C | RDS | O | C | 1 | C | | 1 | C |
| O | D | CD-ROM DECODER | O | D | 1 | D | | 1 | D |
| O | E | | O | E | 1 | E | | 1 | E |
| O | F | | O | F | 1 | F | | 1 | F |

# F I G. 12

| P ADDRESS | | FUNCTION | L ADDRESS | |
|---|---|---|---|---|
| 2 | 0 | | | |
| | | | | |
| 2 | 1 | CASSETTE TAPE DECK | 0 | 3 |
| | | AM/FM TUNER | 0 | 7 |
| 2 | 2 | SINGLE CD PLAYER | 0 | 4 |
| | | AM/FM TUNER | 0 | 7 |
| 2 | 3 | TV TUNER | 0 | 5 |
| | | FM/AM TUNER | 0 | 7 |
| 2 | 4 | DISPLAY | 0 | 1 |
| | | EXTERNAL COMMANDER (KEY) | 0 | 9 |
| 2 | 5 | | | |
| | | | | |
| 2 | 6 | | | |
| | | | | |
| 2 | 7 | | | |
| | | | | |
| 2 | 8 | | | |
| | | | | |

# F I G. 13

| ADDRESS | | FUNCTION | ADDRESS | | FUNCTION |
|---|---|---|---|---|---|
| O | O | MASTER (SOURCE SWITCHING·CONNECTION) | 1 | O | |
| O | 1 | DISPLAY (O) | 1 | 1 | |
| O | 2 | AUDIO (O) | 1 | 2 | AUDIO (1) |
| O | 3 | CASSETTE TAPE DECK | 1 | 3 | |
| O | 4 | SINGLE CD PLAYER | 1 | 4 | |
| O | 5 | TV TUNER | 1 | 5 | |
| O | 6 | MULTIPLE CD PLAYER (O) | 1 | 6 | MULTIPLE CD PLAYER (1) |
| O | 7 | FM/AM TUNER | 1 | 7 | |
| O | 8 | DAT | 1 | 8 | |
| O | 9 | EXTERNAL COMMANDER (WIRED REMOTE CONTROL) | 1 | 9 | |
| O | A | NAVIGATION SYSTEM | 1 | A | |
| O | B | | 1 | B | |
| O | C | RDS | 1 | C | |
| O | D | CD-ROM DECODER | 1 | D | |
| O | E | | 1 | E | |
| O | F | | 1 | F | |

# F I G.14

# F I G. 15

## 200

# F I G.16

# F I G. 17

```
┌─────────────────────┐
│ FUNCTION DISPLAY    │
│ PROCESS             │
└─────────────────────┘
           │
           ▼
┌─────────────────────┐
│ DETERMINE SOURCE    │─── S1
│ THAT IS CURRENTLY   │
│ TURNED ON           │
└─────────────────────┘
           │
           ▼
        MULTIPLE          N
        CD PLAYER? ─────────────────  S2
           │ Y          S4
           ▼                TUNER?        N
┌─────────────────────┐                          IS ADDRESS        N
│ DISPLAY FUNCTIONS   │ S3     │ Y   S5          OF TURNED-ON ─────────── S6
│ OF FUNCTION KEY     │        ▼                 SOURCE THE SAME
│ SWITCHES FOR        │  ┌──────────────┐         AS STORED
│ MULTIPLE CD         │  │ DISPLAY      │         ADDRESS
│ PLAYER              │  │ FUNCTIONS    │           │ Y      S7
└─────────────────────┘  │ OF FUNCTION  │           ▼
                         │ KEY          │         DISPLAY
                         │ SWITCHES FOR │(1)Y     DATA STORED
                         │ TUNER        │           ?
                         └──────────────┘           │ N      (φ)
                                                     ▼
                                          ┌─────────────────────┐
                                          │ REQUEST TRANSFER OF │─ S8
                                          │ DISPLAY DATA FOR    │
                                          │ FUNCTIONS OF FUNCTION│
                                          │ KEY SWITCHES        │
                                          └─────────────────────┘
                                                     │
                                                     ▼
                                        N    DISPLAY          S9
                                       ◄──── DATA RECEIVED?
                                                  │ Y      S10
                                                  ▼
                                            FUN₁?        N        S12
                                                │ ─ ─ ─ ─ ─
                                                │ Y   S11      FUN4?      N
                                                ▼                  │ ─
                                       ┌──────────────┐           │ Y
                                       │ STORE DISPLAY│     ┌──────────────┐
                                       │ DATA IN FUN₁ │     │ STORE DISPLAY│─ S13
                                       └──────────────┘     │ DATA IN FUN₃ │
                                                            └──────────────┘
                                                                   │        S14
                                                                   ▼
                                                            ┌──────────────┐
                                                            │ DISPLAY DATA │
                                                            │ PRESENCE/    │
                                                            │ ABSENCE      │
                                                            │ FLAG←1       │
                                                            └──────────────┘
                                                                   │   S15
                                                                   ▼
                                                            ┌──────────────┐
                                                            │ DISPLAY      │
                                                            │ FUNCTIONS    │
                                                            │ OF FUNCTION  │
                                                            │ KEY SWITCHES │
                                                            └──────────────┘
                                                                   │
                                                                   ▼
                                                              ┌─────────┐
                                                              │  END    │
                                                              └─────────┘
```

# F I G.18

MASTER              CD PLAYER

DT₁  | 100H | 104H | 08 | 50 | PS | 01 | 04 | LS | LM | 03 | CS |
     PA  PA  N  TP    TL LN     Dc

14

RDT₁  | 104H | 100H | 02 | A1 | CS |
     PA  PA  N

14

DT₂  | 104H | 100H | 0C | 63 | PS | 04 | 01 | LS | LM | 14 | 50 |
     PA  PA  N  TP    TL LN    DP₁ DP₂

     | 4C | 41 | 59 | CS |
     DP₃ DP₄ DP₅

RDT₂  | 100H | 104H | 02 | A1 | CS |
     PA  PA  N